# EUROPEAN PATENT SPECIFICATION

(11) **EP 0 201 020 B1**
(45) Date of publication and mention of the grant of the patent: **07.01.1993**
(21) Application number: 86105844.4
(22) Date of filing: 28.04.1986
(51) Int. Cl.: G06F 15/16

(54) **Multiprocessor system architecture**
Mehrprozessorsystem-Architektur
Architecture pour système multi-processeur

(30) Priority: 07.05.1985 IT 2059985
(43) Date of publication of application: 17.12.1986
(73) Proprietor: BULL HN INFORMATION SYSTEMS ITALIA S.p.A., 10014 Caluso (Torino) (IT)
(72) Inventor: Fiacconi, Claudio, I-20043 Arcore (MI) (IT); Franzosi, Antonio, I-27100 Pavia (IT)

(56) References cited:
- WO-A-82/02442
- US-A- 3 483 520
- US-A- 3 940 743
- US-A- 4 038 644

## Description

The present invention relates to a multiprocessor system architecture and more particularly to the communication mechanism enabling the processors to communicate one another.

Several types of multiprocessor system architectures have been suggested. The bus communication architectures are among the more used ones, in view of the performances they offer related to the complexity and the costs.

The several processors are connected one another and to one or more memories through a communication bus accessible in time sharing. An example of a bus system architecture is disclosed by US Patent n. 4,404,628.

The communication bus constitutes the set of leads enabling each of the processors to communicate with one or more common or "shared" memories and with one or more common peripherals.

The communication mechanism between processors and peripherals is generally of direct type, that is the processor selects, by suitable commands, a peripheral unit and if it is free or available the processor sends the suitable commands to it.

The processor therefore operates as "master" as regards the peripheral unit which answers as "slave".

The peripheral units may start communications with the master processor by interruption mechanisms, that is the peripheral unit, which has to communicate information to a processor, generates an interruption signal on an interruption lead, which is not part of the system bus. In due time, the processor which receives the interruption, once the running operations have been completed or suspended, takes into account the interruption by "testing" with suitable commands the interrupting unit to identify the nature and the reasons of such interruption.

This communication mechanism between processors and peripherals units is effective but it imposes the assignment of different rôles of master and slave to the processor and the peripheral unit respectively.

In the case of communication between processors, which can be both central unit (or CPU) as well as peripheral unit control processors or "I/O processors", but which are however intended to operate in an autonomous way and with equal rights, therefore as masters, the use is preferred of a different communication mechanism which does not require changes in the rôles of the processors involved in the communication process.

The used mechanism is the communication through mailbox.

In a shared memory, which can be accessed by several processors, memory areas or "mailboxes" are defined, each one dedicated to a processor but accessible by all the processors.

A processor A, which wants to communicate with a processor B, simply writes a message into the mailbox of processor B.

How can processor B know that a message is present for it into mailbox and how can processor A know that the message has been received?

An approach followed in the prior art was the "polling" one that is the periodic verification of the mailbox content.

In other words processor B periodically read out its mailbox to verify the presence of messages addressed to it.

Likewise processor A read out processor B mailbox to verify the reading out from the mailbox of the sent message or in alternative it periodically verified the presence of an answer message into its own mailbox.

This process required great time wasting and therefore a degradation of the system performances essentially for two reasons: the first is that each processor had to spend part of its time for polling operations, the second is that, as the polling operations required read out memory operations and therefore the occupation of the common bus, two fundamental common resources were used (memory and bus) preventing their possible use by the other processors.

A process for signalling the message presence, very similar to the interruption mechanism, has been therefore associated to the communication process through mailbox.

Such process is defined notify process.

The already mentioned US Patent discloses an embodiment of such mechanism.

Briefly, processor A, after writing a message into processor B mailbox generates a notify signal received and stored by processor B (for instance in a flip-flop). The same "alerting" approach even if through the intermediary of a central controller, controlling access to a common memory, is described in US-A 3483,520.

So processor B has not to effect memory polling operations to verify the presence of messages addressed to it, but it only has to periodically verify the notify flip-flop status without using the system common resources.

With this kind of approach the problem of a better exploitation of the system common resources has been solved only in part.

In fact, if processor A wants to know if the message has been received can follow two alternatives: it may go on to test the common memory to verify if B mailbox has been read out or it can wait for an answer message from processor B, performed with a mechanism of mailbox writing and notify similar to the already described one. The second alternative is for instance known from US-A-3,483,520 already mentioned.

In both cases it is evident that reference to common resources and the operation of one or both the processors is needed.

A further aspect to be considered is the handling, at program level, of the notified messages and the problem of eliminating the interferences in the access to shared resources (in the case they can be accessed by several processors) such as the mailboxes.

In the handling of working programs in multiprocessors systems, preemption operations are often used.

With reference to the notify operations the "preemption" concept means that a message written into a processor A mailbox by a processor B, can be cancelled if the receiving processor has not yet taken it into account, by the sending processor (B) and substituted with a new message.

This may become required if during the development of the several programs the convenience is subsequently detected of firstly carrying out certain operations instead of other ones which have previously constituted the subject of the notify message.

These preemption operations have been made in the art by having the sending processor to read out the message already written into mailbox to verify that the message has not been considered by the receiving processor and therefore it can be cancelled and substituted with another message.

It is clear that to carry out such verifying operation the access to memory is required so preventing the other units from the use of the shared resources (bus and memory). With reference to the interference prevention in the access to common resources, the commonly adopted approach involves the use of a "Test and Set" instruction.

A memory location is coupled to each common resource, for instance a mailbox. In such location a binary information is written indicating if the resource is available or locked.

A processor which wants to access a resource (mailbox) to write a message, must, first of all, verify that no processor is using the resource in the same instant.

To this purpose, before accessing the resource, it executes an undivisible read and write operation (Test & Set) of the memory location coupled to the resource.

Through such operation it reads out the preexistent content of the location and straight after it writes or rewrites an information of locked resource.

This operation is possible only in the systems where the instruction Test & Set is among the ones which can be executed and it requires the use of common resources (memory and bus) so preventing their concurrent use by other units.

All these memory access operations, even if due to different reasons, cause a great limitation and reduction of the system performances.

These limitations are overcome by the multiprocessor system architecture object of the present invention, where the system bus is physically and logically separated into two parts independent the one from the other but which can be connectable each other.

Each part constitute an autonomous (or logical) system bus for each of the processors. Further interruption signals equivalent to notify signals are generated for each processor by at least one flip-flop addressable by a processor for read and set operations, through its own system bus, and addressable by the other processor for reset operations through the system bus of this last processor, the interruption signals being transferred to the receiving processor by coupling means other than the two busses.

Organization of a multiprocessor system based on two independent system busses, which can be connected together by a bus window, is known from U-A-3,940,743.

However the transfer of interruption signals between one processor coupled to one of the busses and a processor coupled to the other of the busses, involves the use of both busses.

Therefore, even if register means are provided in the bus window, which allows to read the status of one of the processor by the other processor, without access to the bus of the one processor, the problem of common resource use in the interruption and notification processes is overcome only in part.

The same concept of readability of an interrupt status register is disclosed in WO-A-82/02442.

However in this case the system is provided with a single bus, with unavoidable contention among processors in any operation requiring the use of the bus, including interruption transfer operations and reading of the interrupt status registers.

On the contrary with the architecture which is the object of the present invention great advantages are achieved in cumulative way:
- any memory polling operation to verify the presence of notify messages is avoided;
- each processor can know the status of the sent notify messages, without having access to common memory resources, and with the only use of its own local bus,
- each processor can execute preemption or notify operation of new messages without the previous verification of the mailbox contents,
- a message acknowledge signal is supplied without requiring reverse notify operations and, if required
- interference problems are solved without requiring the execution of Test and Set operations.

In other words the use of the common resources is reduced to a minimum at the advantage of system performances and by means of very simple circuit elements.

These and other features and advantages of the invention will appear clearly from the following description of a preferred embodiment and from the enclosed drawings where:
- Figure 1: shows in block diagram the EDP system architecture object of the invention, in the case of two processors.
- Figure 2: shows in block form the assignment of particular memory areas to the specific functions of common resources (mailbox) and of locking registers of the common resources.
- Figure 3: shows the circuital diagram of a preferred embodiment of a logic unit, generating the notify and interruption signals, used in the EDP architecture of fig. 1.
- Figure 4: shows a second preferred embodiment of a logic unit, generating notify and interruption signals, used in the EDP architecture of fig. 1.

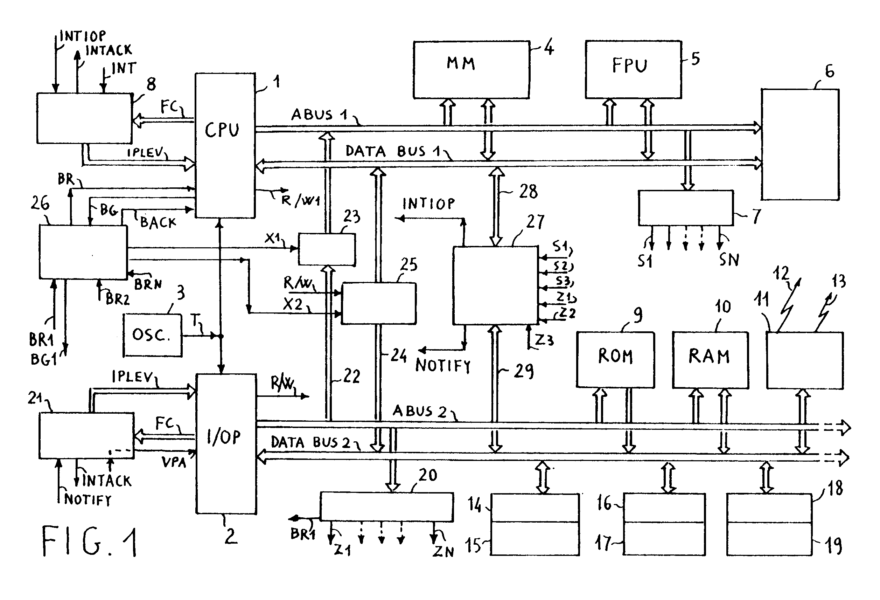

Figure 1 shows in block diagram the EDP system architecture object of the invention.

The system is essentially consituted by a first processor or CPU1 acting as central unit and by a second processor or I/OP2 acting as peripheral control unit.

Preferably the processors consist of integrated units marketed, for instance, by firm MOTOROLA with codes 68010 and 68000 respectively.

CPU1 is connected to an address bus ABUS1 and to a data bus DATA BUS1, consituting a system bus for central unit, while CPU2 is connected to an address bus ABUS2 and to a data bus DATABUS2 constituting a local bus for input/output processor I/OP2.

An oscillator 3 supplies to both the processors and to other system units, some timing pulses T.

A working memory 4 or Main Memory MM is connected to buses DATABUS1 and ABUS1.

Further to memory 4 a floating point unit (FPU) 5 and a bus expansion unit 6 for connection to the system bus of other logical units or peripheral units interfaces are connected to bus ABUS1 and DATABUS1.

The selection of working memory 4, floating point unit 5, expansion unit 6 and other possible units, is effected in a known way, by CPU1 using timing and control signals together with suitable address codes.

To this purpose a decoder 7, preferably constituted by one or more PAL (Programmable array logic) has its inputs connected to bus ABUS1 and supplies, in output, selection signals S1, ..., SN, each one selecting a corresponding one of the several units connected to the system bus.

The working of the units connected to the system bus of CPU1 is always slaved to the commands sent by CPU1 through the bus (provided direct access memory mechanism are not present).

Units such as 4, 5 and 6 can only ask for the CPU 1 intervention through interruption signals (INT).

These signals are collected by an interruption logic unit 8 which transfer them, according to a hierarchical priority and in a mutually exclusive way to CPU1. Logic unit 8 receives an acknowledging signal from CPU1 and sends such signal to the interrupting unit.

CPU1, buses ABUS1, DATABUS1 and units 3, 4, 5, 6, 7, 8 constitute a data processing system able to operate in an autonomous way according to an architecture known in the art.

Further detailed explanation are not therefore required for understanding it.

Likewise processor I/OP2 controls the input/output bus constituted by channels ABUS2 and DATABUS2.

Several units are connected to the input/output of I/OP2 and namely: a read only memory or ROM 9 which memory is designed to contain initialization programs, a working memory or RAM 10, a control unit 11 for communication lines 12, 13, a control unit 14 for a magnetic tape unit 15, for instance a "streamer tape", a control unit 16 for a printer 17, a control unit 18 for magnetic disk unit 19 and a decoder 20, preferably constituted by one or more PAL supplying in output selection commands Z1, ..., ZN, of the several units connected to the input/output bus.

The working of the units connected to the I/O bus is always slaved to the commands sent by processor I/OP2 through the bus.

Units such as 11, 14, 16, 18 can only ask for the intervention of control processor I/OP2, operating as system central unit, through interruption signal.

These signals (INT) are received by an interruption logic unit 21, which transfers them, according to a hierarchical priority and in a time mutually exclusive way, to I/OP2. Logic unit 21 receives an interruption acknowledging singal and sends such signal to the interrupting unit.

I/OP2, buses ABUS2, DATABUS2 and units 9, 10, 11, 12, 13, 14, 15, 16, 17, 18, 19, 20 too constitute a data processing system able to operate in an autonomous way according to an architecture well known in the art. Further detailed explanation are not therefore required for its understanding.

The characterizing elements of the system architecture object of the invention are now considered in detail. They consist of the interconnection of the two previously mentioned systems and the communication mechanism between the two processors CPU1 and I/OP2.

The address channel ABUS2 is connected to the address channel ABUS1 through a unidirectional channel (from ABUS2 to ABUS1) 22, controlled by a set of gates or "drivers" 23, enabled by a selection signal X1. Data bus DATABUS2 is connected to data bus DATABUS1 through a bidirectional channel 24 which is controlled by a set of bidirectional gates or "transceivers" 25, enabled by a selection command X2, which enables the effective signal transfer, and by a command R/W which, according to its logical level, defines the transfer direction.

Command X1, X2 are indirectly generated by processor I/OP2 through unit 26 while command R/W is directly generated by processor I/OP2.

It is therefore clear that processor I/OP2, controlling gates 23, 25, may access the system bus for addressing and read/write operations related to memory 4 which is used as common resource by both CPU1 and processor I/OP2.

It is obviously necessary to settle the conflicts and interferences in the access to the system bus and to memory 4.

To this purpose a conflict solving unit 26 is provided receiving bus access request signal BR1 from processor I/OP2 and corresponding signals BR2, BRN from other possible units, which may access the common memory through the system bus.

Signal BR1 is generated by I/OP2 through decoder 20, and is transferred from unit 20 to a suitable CPU1 input (signal BR).

The most of the microprocessors present on the market and, particularly, microprocessor 68010 used in the preferred embodiment of the invention, are provided with an input intended for this purpose.

CPU1 answers with a bus grant signal BG (Bus Grant) and actually allows the bus access at the end of the running operation.

Signal BG is routed by unit 26 to the requesting unit, in this case I/OP2 (signal BG1) according to a priority logic.

Unit 26 is constituted by an integrated circuit (Motorola cod. 68452) and by logical circuits, timed by system clock T, which, on receipt of signal BG and after detecting that the bus is actually available, generate in suitable sequence and length, a signal BACK which is sent to CPU1, a selection and enabling command X1 of gates 23 and a selection and enabling command X2 of gates 25. So CPU1 and processor I/OP can share (in time sharing) the use of the system bus and of the working memory. On the contrary CPU1 neither can share the use of I/OP bus (that is ABUS2 and DATABUS2) nor can control the units connected to said bus.

How the communication between the two processors CPU1 and I/OP2 take place can now be considered.

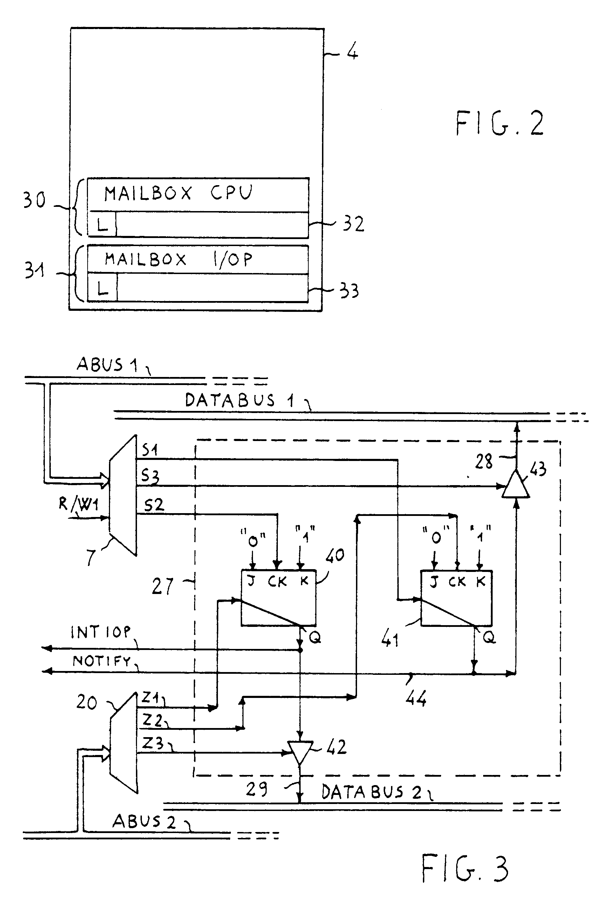

With reference to fig. 2, memory 4 contains two zones 30, 31 named MAILBOX CPU and MAILBOX I/OP which are used as communication means.

A memory location 32, 33 respectively is coupled to each zone, the memory location content defining the status of the mailbox.

In such location a cell at least, referenced with L, defines, with the logic level of the bit contained therein (named lock bit), if the coupled resource (mailbox) is available or not, that is if no processor is executing read/write operation in the mailbox or if a processor is already executing operations in the same memory zone and it does not want that other processors interfere and modify the content of the mailbox.

When processor I/OP2 wants to communicate with CPU1, it tests memory location 32 with a "Test & Set" operation that is with an undivisible read/write operation.

Bit L is however put at logical level 1 but, if through a read out operation processor I/OP detects that L already was at logical level 1, therefore the resource was not available, it abstains from any further operation on MAILBOX CPU.

If, on the contrary, it is detected that L=0, the resource is locked by rising L to 1 and I/OP2 addresses the MAILBOX CPU locations by writing a message for CPU1.

At the end of these operations, by dropping lock bit L to logical level O, I/OP2 makes the resource available for read/write operations performed by CPU1.

Similar operations are executed by CPU1 to read/delete the message addressed to it and for writing the messages for I/OP2 into MAILBOX I/OP.

As working memory 4 is a passive unit processor 1 and 2 can verify if messages addressed to them are present only through memory "polling" operations, that is through periodic testings with consequent memory 4 and system bus locking, so preventing the execution of other operations.

To overcome such inconvenient, according to the invention, a direct processor notify hardware is provided whose status can be detected by both the notified processor and the notifying one.

Further both the set of the notify hardware and its reset, as well as the detection of its status by the notifying processor require the limited use of the local bus, that is of the system bus for CPU1 and of the I/O bus for I/OP processor respectively and therefore they do not interfere with operations at system level but only with local level operations such as central processing or input/output respectively.

The notify hardware consists, with reference to fig. 1, of a notify logic unit 27 selectively connected to DATABUS1 and to DATABUS2 through channels 28, 29 respectively.

Unit 27 is controlled by selection signals/commands S1, S2, S3, Z1, Z2, Z3 coming from decoders 7 and 20 and generates two (or more) notify or interruption signals NOTIFY, INTIOP which are sent to interruption logical unit 21 and 8 respectively.

Fig. 3 shows in detailed diagram the easier embodiment of notify logic unit 27.

This is constituted by two J-K flip flop 40, 41 and by two "tristate drivers" 42, 43.

Flip-flop 40 receives, at its set input, a selection signal Z1 coming from decoder 20, and is set by such signal.

At the direct output Q of flip-flop 40 a signal INTIOP is therefore generated which is sent to the interruption logic unit 8 of CPU1 (Fig. 1).

Direct output Q of flip-flop 40 is connected to input of driver 42, whose output is connected , through bus 29 (constituted in this case, by one only lead) to DATABUS2.

Driver 42 is enabled by a signal Z3 coming from decoder 20.

J-K inputs of flip-flop 40 are permanently kept at logical level "0" and "1" respectively, in order that on receipt of a clock signal at input CK flip-flop 40 is reset.

Clock input of flip-flop 40 receives command signal S2 coming from decoder 20.

Likewise flip-flop 41 receives on its set input a set signal S1 coming from decoder 7 and on clock input CK a reset signal Z2 coming from decoder 20.

Output Q of flip-flop 41 is connected through driver 43 and bus 28 (constituted, in this case, by one only lead) to DATABUS1.

Driver 43 is enabled by a signal S3 coming from decoder 7.

Output Q of flip-flop 41 is further connected through lead 44 to an input of interruption network 21.

When flip-flop 41 is set an interruption NOTIFY signal is sent, through lead 44, to network 21 and from the network to processor I/OP2.

The operation of logic unit 27 and of the two processor system, wherein it is included, is very simple.

When I/OP2 wants to send a message to CPU1 or to have CPU1 executing a process (for instance a computational process) it executes in the order the following operations:
1. Verifying, through Test & Set operation, that mailbox CPU1 is available (lock bit = 0) and consequent resource occupation if it is available.
2. Writing of the message into mailbox CPU1.
3. Making available of mailbox CPU1 by lock bit reset. Operations 1. 2. 3. require access to CPU1 bus and to memory 4, that is they temporaneously lock the whole system bus and the common resource memory 4.
4. Set of flip-flop 4 by generation, on bus ABUS2 only, of a suitable address code which, decoded by decoder 20, generates signal Z1. Signal INTIOP is therefore generated which, through network 26 and according to the established priorities, is transferred to CPU1 as interruption code having a preestablished priority level PL (Fig.1). This operation only needs the occupation of bus I/O and it does not involve bus CPU and the memory common resource.
   At this point, the interrupted processor CPU1, once executed all the operations having a priority level higher than the interruption priority level, takes into account the interruption and executes an interruption handling process involving the following operations.
5. Verifying, through a Test & Set operation, that mailbox CPU1 is available (lock bit = 0) and consequent resource locking if it is actually available.
6. Reading out of the message from mailbox CPU1.
7. Deleting of the message.
8. Making available of mailbox CPU1 by lock bit reset.
9. Reset of flip-flop 40 by generation, on bus ABUS1 only, of a suitable address code which, decoded by decoder 7, generates signal S2.
10. Operating according to the instructions or information contained into the received message.

All these operations require the occupation of the bus CPU only and do not involve bus I/OP so that I/OP2 can go on, in autonomous way, executing other processes using all the resources connected with bus I/OP. Particularly processor I/OP2 can need to send another message to CPU1 and to have to verify if mailbox CPU1 is available or not.

To this purpose I/OP2 has not to execute memory "polling" operations, consequently involving bus CPU1 and the memory, but it has only to generate, on bus ABUS2, an address code which, decoded by decoder 20 generates signal Z3.

This signal enables gate 42 and allows to read flip-flop 40 status through DATABUS2.

If flip-flop 40 is set, it means that the interruption has not been considered yet or that the reading out of the mailbox by CPU1 has not been completed yet.

Then, to verify if the mailbox reading out has been executed I/OP2 have only to execute "polling" operations on flip-flop 40 status, at local level with the only occupation of bus I/OP2 and without interferring with CPU1 operations.

On the contrary if flip-flop 40 is reset, the interruption has been certainly considered, the mailbox read out and therefore able to accept new messages.

I/OP2 can therefore access CPU1 mailbox to write a new message, sure that polling operations are not required and that the Test & Set operation (operation 1) will be certainly successful.

In other words, the possibility of verifying flip-flop 40 status offers to I/OP2 an important information which can be used in several ways.

First of all, it can be seen that, if the rule is respected according to which a mailbox cannot receive new messages before the previously received ones are considered, the Test & Set operations 1) and 5) become unnecessary.

The communication mechanism between several processors through mailbox and notify (or interruption) can therefore be used also for the systems where the processors do not enable the execution of undivisible "Test & Set" operations.

In fact it is clear that, if flip-flop 40 is reset, I/OP2 will find the mailbox available as the CPU does not have any reasons to operate on an empty mailbox lacking any notify or interruption signal.

For the same reason CPU1, once an interruption or notify message is received, is sure that notifying processor I/OP2 will not access the mailbox again to write new messages before it has taken into account the message already stored in the mailbox.

In this sense the system performances are further improved because not only flip-flop 40 status can be detected through polling operation at local bus level but also because certain operations (Test & Set and consequent lock bit reset) requiring the use of resources at system level, can be completely avoided.

Alternatively it is possible to execute "preemption" operations, that is the substitution of a message already stored in mailbox with a prioritary message.

To made possible this operation, without incurring in errors, it suffices to modify the procedure by which CPU1 handles the interruption, so that the operation already referenced with order number 9) precede the operation already referenced with order number 8).

In other words it suffices that CPU1 reset flip-flop 40 straight before lock bit L.

If this condition is accomplished it is clear that processor I/OP2, once stored a message into CPU1 mailbox and set flip-flop 40, can execute polling operation of flip-flop 40 without accessing bus CPU1 and the memory.

In the events it is required that the already sent message be deleted and replaced with another one, processor I/OP2 tests flip-flop 40 status.

If flip-flop 40 has been reset, the message has already been considered by CPU1 and mailbox CPU1 has already been read out or is going to be read out.

In this case the preemption operation cannot be executed and processor I/OP2, after having tested that mailbox CPU1 is actually available, can only store the new message therein.

If on the contrary flip-flop 40 is still in set status, the message has not been considered yet or is in the process of being read out.

The lock bit status indicates which one of the alternatives occurs. I/OP2 can therefore verify the lock bit status through a "Test & Set" operation.

If the resource is available (L=0) the message is certainly present in mailbox and no reading operation is required to verify this presence.

The message can therefore be replaced by a new message.

If the resource is not available the message by CPU1 is in course of being read and the preemption operation is not possible.

It is clear that the possibility of executing a preemption operation can be verified without any memory polling operation so without using common resources.

It has been said that to make the preemption operation without error possible flip-flop 40 must be reset before lock bit L.

Actually it is enough that lock bit L is not reset before flip-flop 40. These two operations can therefore occur contemporaneously and, to this purpose, signal S2 may be obtained from the joined decoding of an address code, addressing mailbox CPU1, and a reset or writing command.

In other words decoding network 7 can receive, in addition to signals present on bus ABUS1, a command R/W1 in output from CPU1 representative of the type of operation to be executed.

This command is shown both in Fig. 1 and in Fig. 2.

The previous considerations, made with reference to flip-flop 40 are obviously valid for flip-flop 41 too, that is the mechanism of message notify to processor I/OP2 by CPU1.

It is clear that notify logic unit 27 disclosed with reference to fig.3 only constitute an easier embodiment of a notify logic according to the present invention and that several changes can be brought without departing from the scope of the invention.

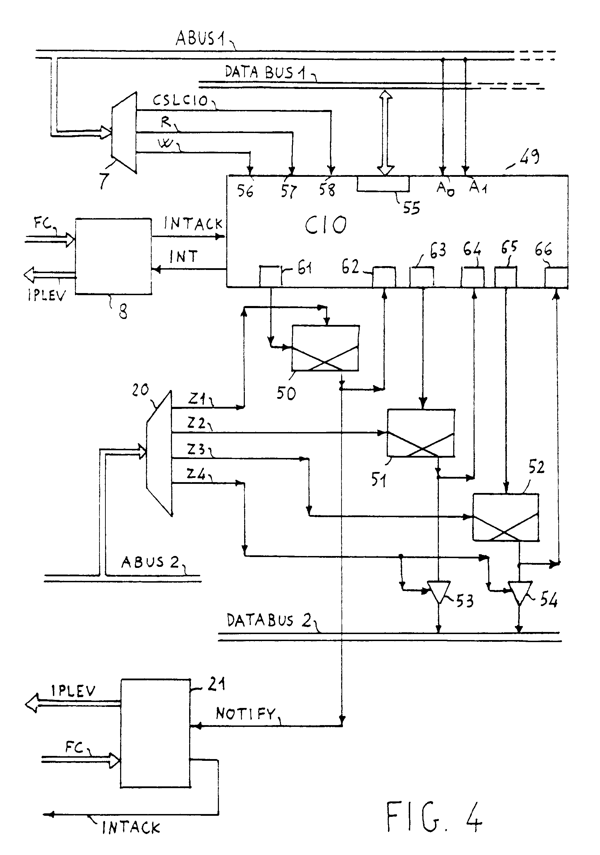

Fig. 4 shows a preferred embodiment of logic unit 27 which takes into account two further factors.

It would be in fact suitable that the interruption notify mechanism itself supplies the interruption handling program address and that a processor supplies interruption/notify signals at different levels according to the type and the urgency required by the notify message. These two concepts must be clarified before considering fig. 4.

The answer of a processor to an interruption signal can be, as known, of two kinds, that is the interruption handling can occur in two different ways.

In a first way, defined as "autovectored" handling, the processor stops both the running operations and the running program, saves the set of information necessary to recall the interrupted program at a suitable time, and jumps, in an autonomous way, to an interruption handling program whose beginning is at a preestablished address known to the processor.

In the previous description reference has been made to this kind of interruption handling.

The "autovectored" handling is very strict and its handling generally requires long and complicated programs, part of which is required to detect the kind and the particular reason of the interruption.

Alternatively, to obtain a higher flexibility in the allocation of the interruption handling or programs, the handling of an interruption can occur in a "vectored" way.

In this case, the interrupted processor, when taking into account the received interruption generates a signal INTACK, as acknowledgment of the interruption, and asks with such signal, to the interrupting unit to be informed, through "vectored" code, about the interruption handling program address which must be used for that particular interruption. With such interruption distinction, the following concept is evidenced.

A unit can interrupt a processor for completely different reasons.

For instance the essential distinction is known between interruption sent because a character, or more generally a set of data, has to be transferred (interruption defined as "I/O transfer interrupt") and interruption sent because it must be signalized that certain operations as a row printing or the execution of a paper feed, in the case of printers, or the track seeking, in the case of disk units, have been completed.

This last kind of interruption is indicated as "I/O termination interrupt".

It is clear that different interruption requests may be generated by both generating different interruption signals as well as by characterizing a common signal with an interruption vector.

A lot of microprocessors available on the market allow to handle the several kind of interruptions according to the two mechanisms.

Among these processors, there are microprocessors 68000 and 68010 which are preferred for the embodiment of the disclosed system.

Microprocessor 68000 (or 68010) is provided with three inputs IPLEV, for receiving a three bit interruption code, which enable to identify up to 7 different levels of interruption, with three outputs FCO allowing to signalize outwards the processor status and the kind of the running cycle.

Particularly, when the three outputs are at logical level 1 the running cycle is an interruption acknowledging one.

By a logical AND operation on the three outputs a signal INTACK of interruption acknowledging can be generated.

Microprocessor 68000 (or 68010) is further provided with an input VPA (Fig. 1) for receiving an omonimous signal which, when at logical level O, during an interruption acknowledging cycle, states that the interruption is of "autovectored" type.

Fig. 4 now considered, shows in detail a preferred embodiment of the notify logic unit 27 together with the system elements connected to it.

The several bus, ABUS1, DATABUS1, ABUS2, DATABUS2, the address decoder 7, 20 and the interruption logic unit are therefore shown.

Logic unit 27 comprises an integrated circuit CIO, an input/output controller 49, three flip-flop 50, 51, 52 and two driver gates 53, 54.

CIO circuit 49 manufactured by the ZILOG firm, is available on the market with code Z8536.

It essentially consists of three programmable timing counters, three data input/output gate set and internal control registers.

The constructive details and the several operations that such circuit can execute will not be considered as they can be easily found in the Zilog technical manual "Z8036 Z-CIO/Z8536-CIO/Counter Timer and Parallel I/O Unit" ZILOG 1982.

However, it is to be noted that the circuit is provided with an 8 bit input/output bidirectional gate 55, for data exchange with bus DATABUS, three control inputs 56, 57, 58 for receiving a write command W, a read out command R, and a selection command GSLCIO respectively, two inputs A1, A0 for receiving register selection signals (3 input/output gate registers and control registers), one terminal for outputting an interruption signal INT, one input for receiving an interruption acknowledging signal INTACK.

CIO circuit 49 is further provided with 3 port registers communicating with the outside. Such registers can be controlled to receive external information or to output binary information.

The several register cells can be individually controlled to constitute input/output elements.

Besides, when the cells are set to receive signals from the outside, they can be furtherly controlled in order that, on receipt of a signal at a preestablished level or, on receipt of a signal transition (from level 0 to 1 or from level 1 to 0), CIO circuit 49 generates an interruption signal.

To each element (input cell) an interruption address "vector" can be coupled which is stored into a control register internal to CIO 49 and which can be read out through port 55.

For the present invention purposes, Fig. 4 shows CIO circuit 49 provided with 6 cells (belonging to a port register) numbered from 61 to 66 respectively.

CIO circuit 49 receives from suitable outputs of decoder 7 a selection signal CSLCIO, a writing command W and a reading out command R.

Selection inputs A0, A1 are connected to two leads of address bus ABUS1.

Thus, CIO circuit 49 can be addressed and controlled, by suitable address codes, through ABUS1 and decoder 7, to perform write operation (information storing), read out operation (information reading out through gate 55 and bus DATABUS1), and preset for operating in suitable way.

Particularly CIO49 is set in order that cells 61, 63, 65 act as output cells, cells 62, 64, 66 as input cells and that for a transition of a signal from 0 to 1 at cells 64, 66 inputs, an interruption signal is generated.

Further two different interruption vectors with preestablished relative priority are coupled to cells 64, 66 (PRIORITY ENCODED VECTOR mode).

The set input of flip-flop 50 is connected to the output of cell 61 and the direct output Q is connected to cell 62, acting as input, as well as to the interruption logic unit input to which output Q supplies a NOTIFY signal.

Flip-flops 51, 52 have their clock input connected to the output of cells 63, 65 respectively and the output Q connected to cells 64, 66 respectively as well as to DATABUS2 through drivers 53, 54 respectively.

Suitable outputs of decoder 20 are respectively connected to the clock input of flip-flop 50 and to the set input of flip-flops 51, 52 which are fed with signals Z1, Z2, Z3 respectively.

A fourth signal Z4 in output from decoder 20 enables driver gates 53, 54.

Once CIO49 is set, through suitable commands, the operation of notify unit 27 is very simple.

When CPU1 has to send a notify signal to processor I/OP2 it selects CIO circuit with a suitable address and controls the generation of a pulse at logical level 1 on cell 61 output.

This pulse sets flip-flop 50 which sends a notify/interruption signal to an input of interruption network 21.

This, as already said, lacking interruption signal at a most prioritary level, generates an interruption code IPLEV which is sent to processor I/OP2.

When I/OP2 considers the interruption, it generates a code FC (with all the bits at logical level 1) which is sent to unit 21 and, by decoding, generates an interruption acknowledging signal INTACK which is applied to input VPA of processor I/OP2 and indicates that the just acknowledged interruption is an "autovectored" interruption.

Processor I/OP2 therefore goes on, in an autonomous way, with the interruption handling, by reading out the message intended for it from the memory mailbox.

At last, through a suitable address code applied to bus ABUS2, and through decoder 20, it generates signal Z1 which resets flip-flop 50. During this whole interval time CPU1 can verify the notify operation status by addressing and selecting CIO circuit 49 for executing a read out operation from cell 62.

This operation clearly requires the access to CPU bus and therefore prevents I/OP2 from the use of the common resources.

However the required time for executing such operation, which is only a reading out operation is very short if compared with a memory polling operation for obtaining the same information.

This last operation would in fact require a routine execution, the first step of which is a "Test & Set" operation and, if this is succesful, the reading out of a mailbox location at least and the subsequent reset of the lock bit.

Likewise, processor I/OP2 can send notify signals to CPU1 so generating a suitable code on bus ABUS2.

The generation of signal Z2 sets flip-flop 51 and the generation of signal Z3 sets flip-flop 52.

The signal transition at the output of flip-flop 51-52 respectively is received by input cells 64 or 66 respectively, of CIO49, which generates an interruption signal INT.

This signal, received by interruption unit 8, is transferred, with due priority observance, in the case concurrent interruption signals are present, in coded form IPLEV to CPU1.

The CPU answers, at suitable time, with an acknowledging code FC which is decoded by unit 8 in an interruption acknowledging signal INTACK.

This signal received by CIO49 authorizes it to transfer an interruption vector corresponding to the acknowledged interruption on bus DATABUS1, through gate 55.

According to whether the interruption is caused by flip-flop 51, and therefore due, for instance, to a data transfer need, or by flip-flop 52 and due, for instance to the termination of some executed command, a different interruption vector is sent to CPU1.

CPU1 can therefore directly access the handling routine of that particular interruption, can read out from mailbox the message containing the interruption parameters and, once read out and deleted the message, CPU1 reset flip-flop 51 or 52 by selecting and controlling CIO49 in order that a reset pulse appear on output cell 63 or 65.

During this time interval I/OP2 can verify the statuses (pending or considered) of the notified messages by generating a signal Z4 enabling driver gates 53 and 54 to transfer the status of flip-flop 51, 52 on DATABUS2.

This operation does not require the access to bus CPU1 or to common resources and is completed in a very short machine cycle, as wait intervals are not necessary (as generally occur in the case of memory reading) because the required information is immediately available.

Fig. 4 embodiment therefore shows that notify logic 27 can be arranged for using both "autovectored" and "vectored" mechanisms, and that each notify unit can generate different notify kinds or levels, without loosing the advantages offered and disclosed with reference to the emboding solution shown in fig. 3.

It is further clear that, while a two processor system has been disclosed, each processor having one own bus, a bus and memory at least, connected to such bus, constituting common resources which can be accessed by both the processors, the same inventive concept can be used in systems where more than two processors are used, with suitable changes which, at this point, will be obvious to the people skilled in the art.

In the previous description reference has not been made to the processors timing and dialogue details which widely depend on the kind of the used processors and are not essential for the invention understanding.

For these details, with reference to microprocessors 68000 and 68010, manufactured by firms Motorola and further by firm Mostek, reference is made to manual "MOSTEK 1982/1983 MICROELECTRONIC DATA BOOK" May 1982 - Page VI-1 ÷ VI-50.

## Claims

1. Multiprocessor system architecture where a first (1) and a second (2) processor at least are provided with a first (ABUS1,DATABUS1) and a second (ABUS2,DATABUS2) autonomous bus respectively and the two busses can be selectively connected each other and where the two processors communicate each other through message stored into mailboxes included in a memory resource (4), connected to one of said busses, and through interruption signals (INTIOP,NOTIFY) comprising:
- an interruption signal generator (27) for generating a first interruption signal (INTIOP) and a second interruption signal (NOTIFY), said generator having connections (28,29) to said first and second bus, said generator being set in a first status, where said first interruption signal is present, by signals applied to said second bus by said second processor and being set in a second status, where said first interruption signal is not present, by signals applied to said first bus by said first processor, said generator being set in a third status, where said second interruption signal is present, by signals applied to said first bus by said first processor and being set in a fourth status, where said second signal is not present by signals applied to said second bus by said second processor,
- first coupling devices (8), other than said first bus, forwarding said first interruption signal (INTIOP) to said first processor (1) without having access to said first bus, and
- second coupling devices (21), other than said second bus, forwarding said second interruption signal (NOTIFY) to said second processor(2) without having access to said second bus.

2. System architecture as per claim 1 further comprising first means (43) controlled by said first processor (1) through said first bus, for reading, through said first bus and the connection of said generator (27) to said first bus, the status (third or fourth) of said generator.

3. System architecture as per claim 2 further comprising second means (42), controlled by said second processor, through said second bus, for reading through said second bus and the connection of said generator to said second bus, the status (first or second) of said generator.

4. In system architecture as per claim 3, communication method between said first and second processor, consisting of the following steps:
- verification by said first processor that said generator is in said fourth status,
- writing by said first processor, in a mailbox coupled to said second processor, of a message intended for said second processor, without locking of the mailbox
- set of said generator in said third status by said first processor and consequent generation of said second interruption signal,
- reading out, by said second processor, of said mailbox coupled to the second processor, without locking of said mailbox, as answer to said second interruption signal,
- set of said generator in said fourth status by said second processor.

5. In a system architecture as per claim 3 a method for message exchange between said first and second processor and for message overwriting consisting in the following steps:
a) verification by said first processor that a mailbox coupled to said second processor is available and locking of the same.
b) writing by said first processor of a message intended for said second processor in said mailbox,
c) setting free of said mailbox coupled to said second processor by said first processor,
d) set of said generator in said third status by said first processor and consequent generation of said second interruption signal.
e) verification by said second processor that said mailbox coupled to said second processor is available and locking of the said mailbox in response to said second interruption signal,
f) reading out by said second processor of said mailbox,
g) set of said generator in said fourth status by said second processor,
h) setting free (liberation) of said mailbox simultaneously with or after previous step (g) by said second processor,
i) verification by said first processor at any instant after steps d) that said generator is in said third status and in the affermative case
j) Verification by said first processor that said mailbox is unlocked and in the affermative case
k) overwriting by said first processor of the message already written with a new message and
l) setting free (unlocking) of said mailbox by said first processor.

## Patentansprüche

1. Mehrprozessor-Systemarchitektur, in der ein erster (1) und ein zweiter (2) Prozessor mit mindestens einem ersten (ABUS1, DATABUS1) bzw. einem zweiten (ABUS2, DATABUS2) autonomen Bus versehen sind und die beiden Busse selektiv miteinanderverbunden werden können und die beiden Prozessoren miteinander einerseits über Anweisungen kommunizieren, welche in Postfächern einer mit einem der Busse verbundenen Speichereinrichtung (4) gespeichert sind, und andererseits über Unterbrechungssignale (INTIOP, NOTIFY) kommunizieren, mit:
- einem Unterbrechungssignalgenerator (27) zum Erzeugen eines ersten Unterbrechungssignals (INTIOP) sowie eines zweiten Unterbrechungssignals (NOTIFY), der Anschlüsse (28, 29) zum ersten und zweiten Bus aufweist, und
- bei Anwesenheit des ersten Unterbrechungssignals durch vom zweiten Prozessor dem zweiten Bus zugeführte Signale in einen ersten Zustand gesetzt wird,
- bei Abwesenheit des ersten Unterbrechungssignals durch vom ersten Prozessor dem ersten Bus zugeführte Signale in einen zweiten Zustand gesetzt wird,
- bei Anwesenheit des zweiten Unterbrechungssignals durch vom ersten Prozessor dem ersten Bus zugeführte Signale in einen dritten Zustand gesetzt wird, und
- bei Abwesenheit des zweiten Unterbrechungssignals durch vom zweiten Prozessor dem zweiten Bus zugeführte Signale in einen vierten Zustand gesezt wird;
- einer vom ersten Bus getrennten ersten Koppeleinrichtung (8), welche das erste Unterbrechungssignal (INTIOP) ohne Zugriff zum ersten Bus dem ersten Prozessor (1) zuleitet;
- einer vom zweiten Bus getrennten zweiten Koppeleinrichtung (21), welche das zweite Unterbrechungssignal (NOTIFY) ohne Zugriff zum zweiten Bus dem zweiten Prozessor (2) zuleitet.

2. Systemarchitektur nach Anspruch 1 mit vom ersten Prozessor (1) über den ersten Bus gesteuerten ersten Mitteln (43) zum Lesen des Zustands (dritten oder vierten) des Generators über den ersten Bus und die Verbindung des Generators (27) mit dem ersten Bus.

3. Systemarchitektur nach Anspruch 2 mit vom zweiten Prozessor über den zweiten Bus gesteuerten zweiten Mitteln (42) zum Lesen des Zustands (ersten oder zweiten) des Generators über den zweiten Bus und die Verbindung des Generators mit dem zweiten Bus.

4. In einer Systemarchitektur nach Anspruch 3 ein Kommunikationsverfahren zwischen dem ersten und dem zweiten Prozessor bestehend aus folgenden Schritten:
- der erste Prozessor verifiziert, daß sich der Generator im vierten Zustand befindet,
- in ein an den zweiten Prozessor angeschlossenes Postfach schreibt der erste Prozessor eine für den zweiten Prozessor bestimmte Anweisung ein, ohne das Postfach zu verriegeln,
- der erste Prozessor setzt den Generator in den dritten Zustand gefolgt von der Erzeugung des zweiten Unterbrechungssignals,
- Auslesen des an den zweiten Prozessor angeschlossenen Postfachs durch den zweiten Prozessor, ohne das Postfach zu verriegeln als Antwort auf das zweite Unterbrechungssignal,
- der Generator wird vom zweiten Prozessor in den vierten Zustand gesetzt.

5. In einer Systemarchitektur nach Anspruch 3, ein Verfahren zum Nachrichtenaustausch zwischen dem ersten und zweiten Prozessor sowie zum Überschreiben von Nachrichten mit folgenden Schritten:
a) Feststellung durch den ersten Prozessor, daß ein mit dem zweiten Prozessor verbundenes Postfach zugängig ist sowie Verriegelung dieses Postfachs,
b) der erste Prozessor schreibt in dieses Postfach eine für den zweiten Prozessor bestimmte Nachricht ein,
c) der erste Prozessor gibt das mit dem zweiten Prozessor verbundene Postfach frei,
d) der Generator wird vom ersten Prozessor in den dritten Zustand gesetzt, gefolgt von der Erzeugung des zweiten Unterbrechungssignals,
e) der zweite Prozessor verifiziert, daß das an den zweiten Prozessor angeschlossene Postfach zugängig ist und verriegelt dieses bei Eingang des zweiten Unterbrechungssignals,
f) Auslesen des Postfachs durch den zweiten Prozessor,
g) der Generator wird vom zweiten Prozessor in den vierten Zustand gesetzt,
h) das Postfach wird gleichzeitig mit oder nach dem vorherigen Schritt (g) vom zweiten Prozessor freigegeben,
i) der erste Prozessor verifiziert zu irgendeinem Zeitpunkt nach dem Schritt (d), daß sich der Generator im dritten Zustand befindet, und wenn dies der Fall ist,
j) der erste Prozessor verifiziert, daß das Postfach entsperrt ist, und wenn dies der Fall ist,
k) der erste Prozessor überschreibt die bereits vorhandene Nachricht mit einer neuen Nachricht und
l) der erste Prozessor entriegelt das Postfach und gibt es frei.

## Revendications

1. Architecture d'un système multiprocesseur dans lequel un premier (1) et un second (2) processeur au moins sont pourvus d'un premier (ABUS1,DATABUS1) et d'un second (ABUS2,DATABUS2) bus autonome respectivement et les deux bus peuvent être connectés sélectivement entre eux et dans lequel les deux processeurs communiquent entre eux par un message mémorisé dans des boîtes à lettres incluses dans une ressource de mémoire (4), connectée à un desdits bus, et par des signaux d'interruption (INTIOP,NOTIFICATION),comprenant:
- un générateur de signaux d'interruption (27) pour engendrer un premier signal d'interruption (INTIOP) et un second signal d'interruption (NOTIFICATION) , ledit générateur ayant des connexions (28,29) auxdits premier et second bus, ledit générateur étant mis dans un premier état, quand ledit premier signal d'interruption est présent, par des signaux appliqués audit second bus par ledit second processeur et étant mis à un deuxième état, quand ledit premier signal d'interruption n'est pas présent, par des signaux appliqués audit premier bus par ledit premier processeur, ledit générateur étant mis dans un troisième état, quand ledit second signal d'interruption est présent, par des signaux appliqués audit premier bus par ledit premier processeur et étant mis dans un quatrième état, quand ledit second signal d'interruption n'est pas présent, par des signaux appliqués audit second bus par ledit second processeur,
- des premiers dispositifs de couplage (8), autres que ledit premier bus, faisant avancer ledit premier signal d'interruption (INTIOP) jusqu'audit premier processeur (1) sans avoir accès audit premier bus, et
- des seconds dispositifs de couplage (21), autres que ledit second bus, faisant avancer ledit second signal d'interruption (NOTIFICATION) jusqu'audit second processeur (2) sans avoir accès audit second bus.

2. Architecture de système selon la revendication 1, comprenant en outre un premier moyen (43) commandé par ledit premier processeur (1) par l'intermédiaire dudit premier bus, pour lire, par ledit premier bus et la connexion dudit générateur (27) audit premier bus, l'état (troisième ou quatrième) dudit générateur.

3. Architecture de système selon la revendication 2, comprenant en outre un second moyen (42), commandé par ledit second processeur, par l'intermédiaire dudit second bus, pour lire,par ledit second bus et la connexion dudit générateur audit second bus, l'état (premier ou deuxième) dudit générateur.

4. Dans une architecture de système selon la revendication 3, procédé de transmission entre lesdits premier et second processeurs, constitué des étapes suivantes :
- la vérification par ledit premier processeur que ledit générateur est dans ledit quatrième état,
- l'écriture par ledit premier processeur, dans une boîte à lettres couplée audit second processeur, d'un message destiné audit second processeur, sans blocage de la boîte à lettres,
- la mise dans ledit troisième état dudit générateur par ledit premier processeur et la génération résultante dudit second signal d'interruption,
- la lecture, par ledit second processeur, de ladite boîte à lettres couplée au second processeur, sans blocage de ladite boîte à lettres, en réponse audit second signal d'interruption,
- la mise dans ledit quatrième état dudit générateur par ledit second processeur.

5. Dans une architecture de système selon la revendication 3, un procédé pour un échange de messages entre ledit premier processeur et ledit second processeur et une superposition d'écriture de message constitué des étapes suivantes:
a) la vérification par ledit premier processeur qu'une boîte à lettres couplée audit second processeur est disponible et le blocage de celle-ci,
b) l'écriture par ledit premier processeur d'un message destiné pour ledit second processeur dans ladite boîte à lettres,
c) la mise à l'état libre de ladite boîte à lettres couplée audit second processeur par ledit premier processeur,
d) la mise dans ledit troisième état dudit générateur par ledit premier processeur et la génération résultante dudit second signal d'interruption,
e) la vérification par ledit second processeur que ladite boîte à lettres couplée audit second processeur est disponible et le blocage de ladite boîte à lettres en réponse audit second signal d'interruption,
f) la lecture par ledit second processeur de ladite boîte à lettres,
g) la mise dans ledit quatrième état dudit générateur par ledit second processeur,
h) la mise à l'état libre (libération) de ladite boîte à lettres simultanément avec ou après l'étape précédente (g) par ledit second processeur,
i) la vérification par ledit premier processeur à tout instant après l'étape d) que ledit générateur est dans ledit troisième état et,dans le cas affirmatif,
j) la vérification par ledit premier processeur que ladite boîte à lettres est non bloquée et, dans le cas affirmatif,
k) la superposition d'écriture par ledit premier processeur du message déjà écrit par un nouveau message et,
l) la mise à l'état libre ( déblocage) de ladite boîte à lettres par ledit premier processeur.
